# FASCICULE DE BREVET EUROPEEN

(11) **EP 1 003 410 B1**
(45) Date de publication et mention de la délivrance du brevet: **06.11.2002**
(21) Numéro de dépôt: 98942755.4
(22) Date de dépôt: 19.08.1998
(51) Int. Cl.: A47J 37/12

(54) **COUVERCLE DE CUVE D'UN APPAREIL DE CUISSON**
BEHÄLTERDECKEL EINES KOCHGERÄTS
BOWL LID FOR COOKING APPLIANCE

(30) Priorité: 20.08.1997 FR 9710734
(43) Date de publication de la demande: 31.05.2000
(73) Titulaire: MOULINEX S.A., 14123 Cormelles Le Royal (FR)
(72) Inventeur: COLLAS, Guy, F-14123 Ifs (FR); LEREVEREND, Jean, F-14000 Caen (FR)
(74) Mandataire: Busquets, Jean-Pierre
(86) Numéro de dépôt international: FR9801822
(87) Numéro de publication internationale: WO99008581

(56) Documents cités:
- EP-A- 0 527 418
- BE-A- 870 418
- DE-U- 8 006 417

## Description

La présente invention se rapporte aux couvercles de cuves d'appareils de cuisson présentant un logement qui est approprié à recevoir un filtre destiné à absorber les odeurs et graisses émises en cours de cuisson, et qui présente des ouïes d'entrée ainsi que des ouïes d'échappement communiquant avec l'extérieur.

Un tel couvercle est décrit par exemple dans BE-A-870 418.

Dans la plupart des couvercles des appareils existant sur le marché, le logement est formé par un évidement pratiqué dans la paroi supérieure du couvercle et fermé par une trappe présentant les ouïes d'échappement. Or, une telle réalisation doit satisfaire, non seulement, à des exigences esthétiques réclamant un assemblage trappe-logement sans jeu et si possible avec un affleurement de la trappe à la surface de la paroi supérieure du couvercle, mais aussi, aux contraintes thermiques élevées dues à la vapeur surchauffée traversant de bas en haut le filtre et le logement ; contraintes qui sont antinomiques avec les exigences esthétiques.

Le fabricant est donc amené à faire un compromis et à concevoir un assemblage particulier avec un verrou à rattrapage de jeu tout en préservant une commodité de désassemblage pour permettre le changement des filtres usagés. Une telle réalisation est donc coûteuse et nécessite aussi, lors de la fabrication de l'appareil, des opérations manuelles minutieuses d'assemblage contraires à une fabrication en grande série.

La présente invention a notamment pour but de remédier à ces inconvénients et de réaliser un couvercle avec filtre qui soit d'une conception simple. Selon l'invention, le logement présente une ouverture qui débouche de la jupe latérale du couvercle et à travers laquelle est monté escamotable le filtre, un moyen d'étanchéité étant prévu pour rendre étanche le logement lorsque le filtre est disposé dans le logement.

Ainsi, le fait de réaliser un logement débouchant latéralement au couvercle, et non plus dans la paroi supérieure du couvercle, permet de garantir une esthétique du couvercle tout en supprimant les problèmes d'assemblage trappe-logement. Ces avantages sont particulièrement importants lorsque le couvercle est réalisé en un matériau plastique peu coûteux tel que le polypropylène.

Par ailleurs, dans les couvercles connus munis de filtres et lors de cuissons par friture, ces filtres sont rapidement imprégnés et saturés de résidus goudronneux qui rendent extrêmement délicat leur extraction hors du logement.

Selon une caractéristique supplémentaire de l'invention, le filtre est placé dans un tiroir monté coulissant dans le logement et comportant un moyen de préhension dont une région est adaptée à venir fermer l'ouverture dudit logement.

Ainsi, grâce à ce tiroir, la mise en place ou l'extraction du filtre, qu'il soit composé d'une cartouche ou de matériau en vrac, ne pose aucun problème à l'utilisateur, et garantit une certaine hygiène.

Les caractéristiques et avantages de l'invention ressortiront de la description qui va suivre, prise à titre d'exemple non limitatif, en référence aux dessins annexés dans lesquels :
- la figure 1 est une vue schématique en coupe transversale d'un couvercle équipé d'un filtre selon l'invention;
- la figure 2 est une variante de réalisation d'un couvercle selon l'invention vu en perspective partielle illustrant un tiroir de support d'un filtre en position escamotée ;
- la figure 3 est une vue similaire à la figure 2, mais avec le tiroir en position d'extraction.

Dans l'ensemble des figures précitées, les éléments communs assurant des fonctions communes seront désignés par les mêmes références.

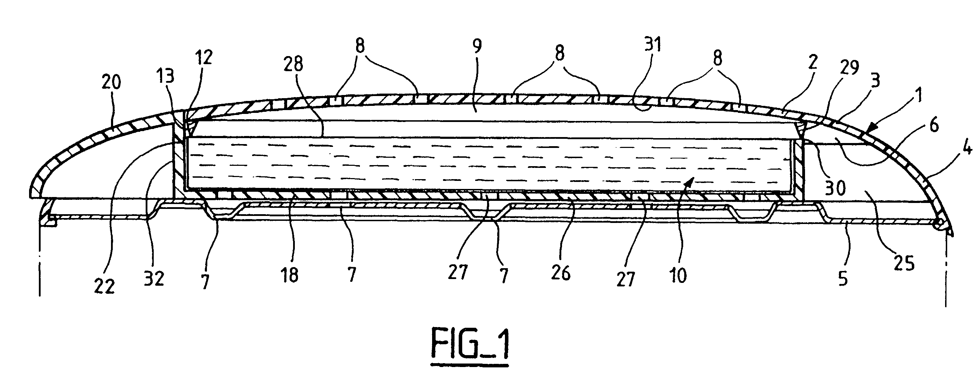

Dans l'exemple de réalisation illustré à la figure 1, le couvercle référencé en 1 comporte une paroi supérieure 2 qui est réalisée en un matériau plastique tel qu'un polypropylène et dont le bord périphérique 3 porte une jupe latérale descendante 4. Ce couvercle pourrait être également réalisé en une pièce métallique emboutie. Le couvercle comporte également une paroi inférieure 5, réalisée de préférence en métal, fixée à distance de la paroi supérieure 2 et délimitant ainsi un espace pratiquement clos 6. Cette paroi inférieure 5 présente des ouïes 7 d'entrée de vapeur, tandis que la paroi supérieure 2 présente des ouïes 8 d'échappement communiquant avec l'extérieur. De façon connue en soi, la paroi inférieure 5 porte un joint d'étanchéité destiné à venir s'appliquer en fonctionnement contre le bord de la cuve de réception des aliments à cuire d'un appareil de cuisson qui peut être par exemple un cuiseur à riz, une friteuse ou un multi-cuiseur.

Dans l'espace clos 6 est ménagé un logement 9 approprié à recevoir un filtre 10 destiné à absorber les odeurs et graisses émises en cours de cuisson.

Selon l'invention, le logement 9 présente une ouverture 12 débouchant latéralement au couvercle 1, et le filtre 10 est monté escamotable de façon étanche à travers ladite ouverture 12.

Dans une première forme de réalisation comme illustrée à la figure 1, l'ouverture 12 est pratiquée dans la jupe 4 et débouche directement à l'extérieur du couvercle.

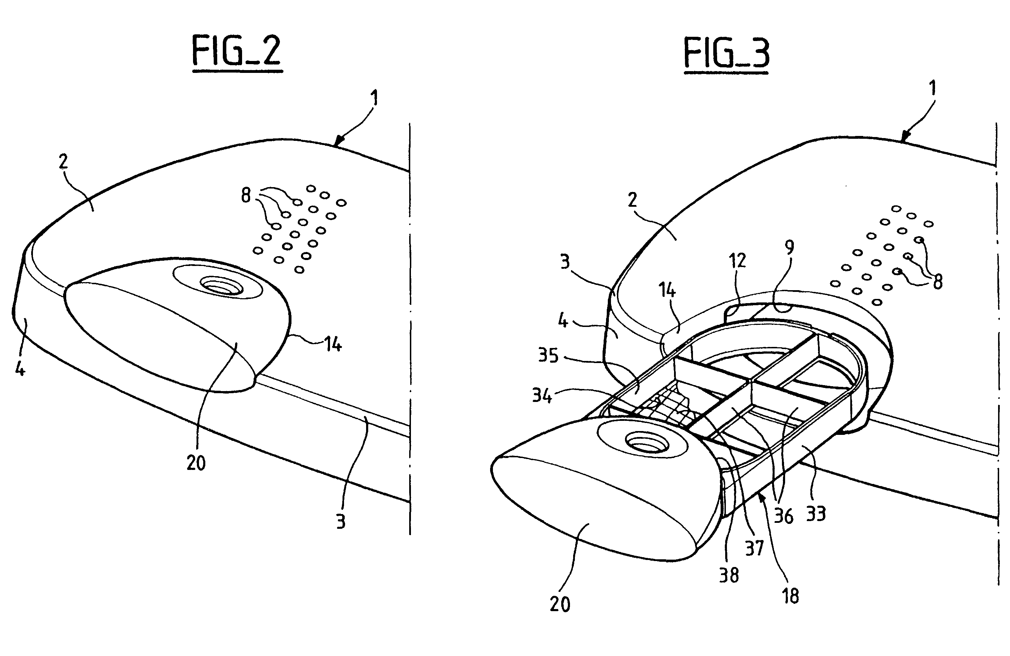

Dans une seconde forme de réalisation comme illustrée aux figures 2 et 3, l'ouverture 12 débouche latéralement dans une dépression 14 formée à cheval dans la jupe latérale 4 et dans la paroi supérieure 2.

De façon à rendre étanche le logement 9, l'invention prévoit de fermer l'ouverture 12 par un moyen d'étànchéité 13 qui peut être par exemple un bouchon (non représenté) de forme complémentaire à celle de l'ouverture. Par la suite sera décrit un autre moyen d'étànchéité qui sera plus approprié aux formes de réalisation décrites.

Le filtre 10 peut être constitué par exemple par une cartouche à cadre rigide ou à toile filtrante contenant des grains de charbon actif, ou par des nappes filtrantes chargées de charbon actif, ou bien même par une ou des feuilles métalliques perforées et superposées formant des chicanes.

Selon un aspect important de l'invention, le filtre 10 est placé dans un tiroir 18 monté coulissant dans le logement 9 et comportant un moyen de préhension 20 dont une région 22 est adaptée à former le moyen d'étanchéité 13 et à venir fermer l'ouverture 12 de façon étanche. Dans le mode de réalisation illustré à la figure 1, le tiroir 18 est monté coulissant sur la paroi inférieure 5 et présente la forme générale d'un parallélépipède rectangle dont les deux grands côtés latéraux (non visibles) viennent coulisser respectivement sur deux nervures 25 solidaires du couvercle. Le fond 26 du tiroir présente des passages 27 laissant passer la vapeur venant des ouïes d'entrée 7, tandis que son débouché 28 laisse passer la vapeur vers les ouïes d'échappement 8 après avoir traversé le filtre.

Pour assurer une bonne étanchéité du tiroir 18 dans le logement 9, on peut prévoir, à titre d'exemple, d'adjoindre un joint d'étanchéité 29 entre le bord supérieur 30 du tiroir et la paroi interne 31 du logement qui est présentement la surface interne du couvercle.

En regard de cette figure, le moyen de préhension 20 est formé par une poignée solidaire d'un petit côté 32 du parallélépipède et dont la forme épouse la forme générale du couvercle de manière à rendre plus esthétique le couvercle équipé de son filtre.

Dans le mode d'exécution illustré aux figures 2 et 3, le tiroir 18 est formé par un cadre 33 comportant un bossage formant le moyen de préhension 20 et un rebord périphérique interne 34 destiné à recevoir une cage 35 présentant des traverses 36 de manière à constituer une ossature pour un filtre 10 compartimenté à charbon actif par exemple et dont le fond 37 schématiquement et partiellement représenté à la figure 3 peut être réalisé par tamis ou un grillage imputrescible. Ainsi, cette cage 35 peut être facilement remplacée et les opérations de chargement et de vidage du tiroir sont rendues propres et commodes.

Comme on le voit mieux sur la figure 3, le bossage présente une forme complémentaire à la dépression 14 du couvercle et sa partie antérieure 38 est adaptée à constituer le moyen d'étanchéité 13 et forme ainsi un bouchon pour l'ouverture 12 du logement 9.

Grâce à l'invention, pour extraire ou introduire un filtre dans le couvercle et plus précisément dans le logement 9, l'usager par le moyen de préhension 20 fait coulisser le tiroir 18 à travers l'ouverture 12 et l'amène soit à la position escamotée illustrée aux figures 1 et 2 en lesquelles l'étanchéité du logement 9 est automatiquement assurée, soit à la position d'extraction de la figure 3.

Une fois le tiroir extrait, l'usager en fonction du filtre 10 utilisé peut soit enlever ce filtre en le saisissant, soit retourner le tiroir 18 au-dessus d'une poubelle pour faire tomber le filtre.

## Revendications

1. Couvercle de cuve d'un appareil de cuisson comportant une paroi supérieure (2) et une jupe latérale (4), un logement (9) recevant un filtre (10) apte à absorber les odeurs et graisses émises en cours de cuisson, et présentant des ouïes d'entrée (7) ainsi que des ouïes d'échappement (8) communiquant avec l'extérieur,
**caractérisé en ce que** le logement (9) présente une ouverture (12) qui débouche de la jupe latérale (4) du couvercle et à travers laquelle est monté escomotable le filtre (10), un moyen d'étanchéité (13) étant prévu pour rendre étanche le logement (9) losque le filtre (10) est disposé dans ledit logement.

2. Couvercle selon la revendication 1,
**caractérisé en ce que** l'ouverture (12) est pratiquée dans la jupe latérale (4) du couvercle et débouche directement à l'extérieur du couvercle.

3. Couvercle selon la revendication 1,
**caractérisé en ce que** l'ouverture (12) débouche dans une dépression (14) formée à cheval dans la jupe latérale (4) et dans la paroi supérieure (2) du couvercle.

4. Couvercle selon la revendication 2 ou 3,
**caractérisé en ce que** l'ouverture (12) est fermée par le moyen d'étanchéité (13) ayant une forme complémentaire à celle de ladite ouverture.

5. Couvercle selon la revendication 4,
**caractérisé en ce que** le filtre (8) est placé dans un tiroir (18) monté coulissant dans le logement (9) et comportant un moyen de préhension (20) dont une région (22) est adaptée à former le moyen d'étanchéité (13).

6. Couvercle selon la revendication 5,
**caractérisé en ce que** le tiroir (18) présente la forme générale d'un parallélépipède rectangle dont les deux grands côtés latéraux viennent coulisser respectivement sur deux nervures (25) solidaires du couvercle et son fond (26) présente des passages (27) pour la vapeur.

7. Couvercle selon la revendication 6,
**caractérisé en ce que** le filtre est formé par une cartouche à cadre rigide ou à toile filtrante contenant du charbon actif.

8. Couvercle selon la revendication 5,
**caractérisé en ce que** le tiroir (18) est formé par un cadre (33) comportant un bossage formant le moyen de préhension (20) et un rebord interne(34) destiné à recevoir une cage (35).

9. Couvercle selon la revendication 8,
**caractérisé en ce que** la cage (35) constitue une ossature pour un filtre (10) compartimenté à charbon actif et comporte un fond (37) réalisé par un tamis.

10. Couvercle selon l'une quelconque des revendications précédentes,
**caractérisé en ce qu'**il est réalisé en un matériau plastique tel qu'un polypropylène.

## Claims

1. Bowl lid for a cooking apparatus having a top wall (2) and a lateral skirt (4), a housing (9) receiving a filter (10) able to absorb the odours and fats emitted during cooking, and having inlet orifices (7) and exhaust orifices (8) communicating with the outside, **characterised in that** the housing (9) has an opening (12) which opens out from the lateral skirt (4) of the lid and through which the filter (10) is mounted in a retractable fashion, a sealing means (13) being provided for making the housing (9) airtight when the filter (10) is disposed in the said housing.

2. Lid according to Claim 1, **characterised in that** the opening (12) is formed in the lateral skirt (4) of the lid and opens out directly outside the lid.

3. Lid according to Claim 1, **characterised in that** the opening (12) opens out in a hollow (14) formed straddling in the lateral skirt (4) and in the top wall (2) of the lid.

4. Lid according to Claim 2 or 3, **characterised in that** the opening (12) is closed by the sealing means (13) having a shape complementary to that of the said opening.

5. Lid according to Claim 4, **characterised in that** the filter (8) is placed in a slide (18) mounted slidably in the housing (9) and having a gripping means (20), one region (22) of which is adapted to form the sealing means (13).

6. Lid according to Claim 5, **characterised in that** the slide (18) has the overall shape of a right-angled parallelepiped whose two large lateral sides come to slide respectively on two ribs (25) integral with the lid and its bottom (26) has passages (27) for steam.

7. Lid according to Claim 6, **characterised in that** the filter is formed by a cartridge with a rigid frame or with a filter cloth containing activated carbon.

8. Lid according to Claim 5, **characterised in that** the slide (18) is formed by a frame (33) having a protrusion forming the gripping means (20) and an internal rim (34) intended to receive a cage (35).

9. Lid according to Claim 8, **characterised in that** the cage (35) constitutes a framework for a compartmented activated-carbon filter (10) and has a bottom (37) produced by means of a sieve.

10. Lid according to any one of the preceding claims, **characterised in that** it is produced from a plastics material such as a polypropylene.

## Patentansprüche

1. Deckel für das Gefäß eines Kochgeräts mit einer oberen Wand (2) und einer seitlichen Schürze (4), einem Sitz (9), der ein Filter (10) aufnimmt, das die im Verlauf des Kochvorgangs abgegebenen Gerüche und Fettstoffe absorbieren kann, und Eingangslöcher (7) sowie Austrittslöcher (8), die mit der Umgebung in Verbindung stehen, aufweist, **dadurch gekennzeichnet, daß** der Sitz (9) eine Öffnung (12) aufweist, die in der seitlichen Schürze (4) des Deckels mündet und durch die einschiebbar das Filter (10) montiert ist, wobei ein Abdichtungsmittel (13) vorgesehen ist, um den Sitz (9) abzudichten, wenn das Filter (10) in ihm angeordnet ist.

2. Deckel nach Anspruch 1, **dadurch gekennzeichnet, daß** die Öffnung (12) in der seitlichen Schürze (4) des Deckels ausgebildet ist und direkt zur Umgebung des Deckels mündet.

3. Deckel nach Anspruch 1, **dadurch gekennzeichnet, daß** die Öffnung (12) in einer Vertiefung (14) mündet, die nach beiden Seiten in der seitlichen Schürze (4) und in der oberen Wand (2) des Deckels gebildet ist.

4. Deckel nach Anspruch 2 oder 3, **dadurch gekennzeichnet, daß** die Öffnung (12) durch das Abdichtungsmittel (13) verschlossen ist, das eine zur Form der Öffnung komplementäre Form aufweist.

5. Deckel nach Anspruch 4, **dadurch gekennzeichnet, daß** das Filter (8) in einem Schubfach (18) angeordnet ist, das im Sitz (9) verschiebbar montiert ist und eine Griffvorrichtung (20) aufweist, von der ein Bereich (22) zur Bildung des Abdichtungsmittels (13) ausgebildet ist.

6. Deckel nach Anspruch 5, **dadurch gekennzeichnet, daß** das Schubfach (18) die allgemeine Form eines rechtwinkligen Quaders aufweist, dessen zwei große Seiten jeweils an zwei Rippen (25) gleiten, die fest mit dem Deckel verbunden sind, und sein Boden (26) Durchlässe (27) für den Dampf aufweist.

7. Deckel nach Anspruch 6, **dadurch gekennzeichnet, daß** das Filter von einer Kartusche mit starrem Rahmen oder mit Filtertuch, welche Aktivkohle enthält, gebildet ist.

8. Deckel nach Anspruch 5, **dadurch gekennzeichnet, daß** das Schubfach (18) von einem Rahmen (33) gebildet ist, der einen die Griffvorrichtung (20) bildenden Vorsprung und eine zur Aufnahme eines Käfigs (35) bestimmte innere Randleiste (34) aufweist.

9. Deckel nach Anspruch 8, **dadurch gekennzeichnet, daß** der Käfig (35) ein Gerippe für ein in Abteilungen unterteiltes Aktivkohlefilter (10) bildet und einen durch ein Netz gebildeten Boden (37) aufweist.

10. Deckel nach einem der vorangehenden Ansprüche, **dadurch gekennzeichnet, daß** er aus einem Kunststoffmaterial, wie einem Polypropylen hergestellt ist.
